# EUROPÄISCHE PATENTSCHRIFT

(11) **EP 3 814 726 B1**
(45) Veröffentlichungstag und Bekanntmachung des Hinweises auf die Patenterteilung: **07.06.2023**
(21) Anmeldenummer: 19740309.0
(22) Anmeldetag: 25.06.2019
(51) Int. Cl.: G01F 1/66

(54) **ULTRASCHALLSENSORANORDNUNG**
ULTRASOUND MEASURING DEVICE
DISPOSITIF DE MESURE PAR ULTRASONS

(30) Priorität: 27.06.2018 EP 18180016; 25.10.2018 DE 102018126610
(43) Veröffentlichungstag der Anmeldung: 05.05.2021
(73) Patentinhaber: Sensus Spectrum, LLC, Morrisville, North Carolina 27560 (US)
(72) Erfinder: MÜLLER, Frank, 30952 Ronnenberg (DE); PFEIFFER, Andreas, 30627 Hannover (DE)
(74) Vertreter: Patentanwälte Dr. Keller, Schwertfeger Partnerschaft mbB
(86) Internationale Anmeldenummer: PCT/EP2019/066796
(87) Internationale Veröffentlichungsnummer: WO 2020/002311

(56) Entgegenhaltungen:
- WO-A1-2018/011372
- DE-A1- 10 249 542
- DE-A1-102015 004 049
- US-A1- 2013 047 743
- US-A1- 2013 061 687
- US-A1- 2013 139 610
- US-A1- 2013 312 537
- US-A1- 2016 334 251
- US-A1- 2017 122 916
- US-A1- 2017 132 997
- US-A1- 2017 146 378
- US-A1- 2017 167 904

## Beschreibung

### Technisches Gebiet:

Die vorliegende Beschreibung betrifft eine Ultraschallsensoranordnung sowie eine Messvorrichtung zur Bestimmung des Durchflusses eines durch einen Rohrabschnitt hindurchströmenden Fluids, umfassend eine solche Ultraschallsensoranordnung.

### Stand der Technik:

Zur Bestimmung des Durchflusses eines durch einen Rohrabschnitt hindurchströmenden Fluids werden bei einer Art von Messverfahren Ultraschallsensoren eingesetzt. Ein Ultraschallsensor koppelt akustische Signale in das Fluid und ein Ultraschallempfänger nimmt das Signal am Ende einer vorgegebenen Wegstrecke des Signals auf. Aus der gemessenen Laufzeit des Signals im Vergleich zu einer gemessenen Laufzeit eines Signals in einem Zustand, in dem das Fluid im Messrohr nicht strömt, lässt sich in Kenntnis der Messrohrgeometrie der Durchfluss eines strömenden Fluids durch das Messrohr bestimmen. Bei diesem Verfahren zur Bestimmung des Durchflusses des durch einen Rohrabschnitt hindurchströmenden Fluids handelt es sich um ein sogenanntes Laufzeitdifferenzverfahren.

Man unterscheidet im Wesentlichen zwei Möglichkeiten, Ultraschallsignale in das Messrohr bzw. das Fluid einzukoppeln. Bei einem Messverfahren bzw. bei der dazu verwendeten Messvorrichtung werden die Ultraschallsensoren an der Außenseite des Messrohrs befestigt, so dass der Ultraschall durch die Rohrwand geführt wird. Bei dieser Anordnung des Ultraschallsensors auf dem Messrohr handelt es sich um eine sogenannte Clamp-on-Anordnung.

Bei einem anderen Aufbau einer Messvorrichtung sind in der Rohrwand des Messrohrs Öffnungen vorgesehen, in denen die Ultraschallsensoren angeordnet sind, so dass der Schall aus den Ultraschallsensoren direkt in das Fluid eingekoppelt werden kann. Ein Schalldurchgang durch die Rohrwand des Messrohrs wird dadurch vermieden.

Da ein akustisches Signal beim Durchgang durch eine Rohrwand gebrochen und gedämpft werden kann, ist es in Bezug auf die Qualität des Messsignals von Vorteil, das akustische Signal direkt in das Fluid einzukoppeln.

Bei dieser Art der Ultraschalleinkopplung, bei der das akustische Signal direkt vom Ultraschallsensor in das Fluid eingekoppelt wird, bestehen jedoch besondere Anforderungen an den Ultraschallsensor, insbesondere an die Befestigung des Ultraschallwandlers im Messrohr. So muss gewährleistet sein, dass der Ultraschallsensor fluiddicht in dem Messrohr sitzt. Das den Ultraschall erzeugende Mittel wie etwa ein piezoelektrisches Element und die damit verbundene elektrische Versorgung muss vor dem im Messrohr strömenden Fluid geschützt werden. Weiterhin muss sichergestellt werden, dass der Ultraschallsensor die messtechnisch vorbestimmte Position im Messrohr dauerhaft beibehält. Im Gegensatz zu den auf dem Messrohr montierten Ultraschallsensoren wirkt das durch das Messrohr hindurchströmende Fluid bei dieser Anordnung direkt auf den Ultraschallsensor, so dass hohe Drücke im Messrohr dazu führen können, dass der Ultraschallsensor aus seiner Position im Messrohr nach außen gedrückt wird. Ein nicht ordnungsgemäß ausgerichteter Ultraschallsensor führt zu falschen Messergebnissen. Bei der Montage des Ultraschallsensors ist darüber hinaus darauf zu achten, dass der Ultraschallsensor, insbesondere das Koppelelement nicht gequetscht eingebaut wird, da eine Komprimierung des Koppelelements die akustischen Eigenschaften des Koppelelements beeinflusst und im äußersten Fall sogar das Koppelelement bzw. den Ultraschallsensor beschädigt.

Einige Messvorrichtungen zur Bestimmung des Durchflusses mit Ultraschallsensoren werden im freien Gelände eingesetzt, so dass die Messvorrichtungen einschließlich der Ultraschallsensoren schwankenden Umgebungsbedingungen und Feuchtigkeit oder sogar Wasser ausgesetzt sind. Große Temperaturunterschiede gepaart mit der von außen auf den Ultraschallsensor wirkenden Feuchtigkeit können dazu führen, dass die Ultraschallsensoren nicht mehr ordnungsgemäß arbeiten, im Extremfall sogar ausfallen. Patentdokument US 2013/047743 A1 offenbart einen Ultraschall-Durchflussmesser aus dem Stand der Technik.

### Darstellung der Erfindung:

Es ist Aufgabe der vorliegenden Erfindung, eine Ultraschallsensoranordnung bereitzustellen, die einfach montierbar ist, die erforderliche Dichtigkeit im Messrohr aufweist und präzise Messergebnisse auch im Einsatz unter schwankenden Umgebungsbedingungen und/oder Feuchtigkeit liefert.

Erfindungsgemäß wird die Aufgabe gelöst durch eine Ultraschallsensoranordnung umfassend ein Gehäuse mit einem oben offenen Behälter, ein scheibenförmiges, piezoelektrisches Element und ein Koppelelement im Inneren des Behälters, wobei das Koppelelement über eine Auflagefläche, an der das piezoelektrische Element angeordnet ist, verfügt und an der Unterseite des Behälters vorgesehen ist, wobei der Behälter und das Koppelelement einstückig ausgebildet sind und wobei zumindest das piezoelektrische Element mit einer Vergussmasse bedeckt ist, wobei die Auflagefläche zumindest abschnittsweise von einer Wand umgeben ist und wobei in der Wand offene Schlitze vorgesehen sind.

Die einstückige Ausbildung des Behälters und des Koppelelements lässt die Ultraschallsensoranordnung einfach einbauen und sorgt für eine gleichmäßige Wärmeausdehnung des Materials unter Einfluss von höheren Temperaturen, so dass im Inneren der Ultraschallsensoranordnung bei Temperaturänderungen keine oder kaum Materialspannungen auftreten, die die akustischen Eigenschaften des Koppelelements beeinflussen. Die Vergussmasse schützt zumindest das piezoelektrische Element vor Wasser und Feuchtigkeit in feuchten oder nassen Umgebungsbedingungen.

Um beim Herstellungsprozess sicherzustellen, dass das piezoelektrische Element vollständig mit Vergussmasse bedeckt wird, ist es vorgesehen, dass die Auflagefläche zumindest abschnittsweise von einer Wand umgeben ist.

Piezoelektrische Elemente sind mit elektrischen Kabeln bzw. elektrischen Leitungen verbunden, die vom piezoelektrischen Element aus der Ultraschallsensoranordnung herausgeführt werden müssen. Zur gezielten Führung der Kabel bzw. elektrischen Leitungen sind in der Wand einseitig offene Schlitze, insbesondere oben offene Schlitze vorgesehen sind. Bei einer bevorzugten Ausführungsform ist die Breite der Schlitze so gewählt, dass die elektrischen Kabeln bzw. elektrischen Leitungen eingeklemmt werden. Dies verhindert ein Aufschwimmen der elektrischen Kabeln bzw. elektrischen Leitungen beim Einfüllen der Vergussmasse.

Bei einer bevorzugten Ausführungsform sind auf der Auflagefläche Abstandshalter vorgesehen, so dass zwischen piezoelektrischem Element und Auflagefläche ein Hohlraum entsteht, in den eine gleichmäßige Klebeschicht einbringbar ist.

Vorzugsweise sind die Abstandshalter so ausgelegt, dass das piezoelektrische Element und die Auflagefläche parallel zueinander ausgerichtet sind. Der Abstand zwischen piezoelektrischem Element und Koppelelement und die parallele Ausrichtung des piezoelektrischen Elements in Bezug auf die Auflagefläche des Koppelelements verhindern, dass Materialspannungen aufgrund von Temperaturschwankungen ungleichmäßig auf das piezoelektrische Element und den Koppelelement wirken. Somit können über einen vergleichsweise großen Temperaturbereich vergleichbare Messergebnisse erhalten werden.

Bei einer bevorzugten Ausführungsform ist das Koppelelement keilförmig ausgebildet. Hierdurch besteht die Möglichkeit einer schrägen Einkopplung des akustischen Signals in das Messrohr.

Es ist von Vorteil, dass das Koppelelement und/oder die Vergussmasse aus einem transparenten Material hergestellt sind. In einem transparenten Material lassen sich Materialfehler beim Herstellungsprozess einfach erkennen.

Zur Vermeidung von Zug an den elektrischen Leitungen eines piezoelektrischen Elements ist es von Vorteil, dass das Gehäuse eine Gehäusewand aufweist und zwischen Koppelelement und Gehäusewand ein Hohlraum vorgesehen ist. In diesen Hohlraum kann eine Überlänge einer elektrischen Leitung als Längenausgleich deponiert werden.

Vorzugsweise ist dieser Hohlraum ebenfalls mit Vergussmasse gefüllt, so dass gemäß einer bevorzugten Ausführungsform der gesamte Behälter mit Vergussmasse gefüllt ist, um eine ausreichend fluiddichte Ultraschallsensoranordnung bereitzustellen.

Bei einer bevorzugten Ausführungsform weist das Gehäuse einen umlaufenden Rand auf, der nach außen versetzt an der Oberseite des Behälters angeordnet ist. Der umlaufende Rand dient mit seiner Unterseite als Anlagefläche der Ultraschallsensoranordnung auf dem Messrohr.

Da die Bauteile, wie etwa Messrohre, in die die Ultraschallsensoranordnung eingesetzt werden soll, häufig Maßschwankungen aufweisen, ist es von Vorteil, dass die Ultraschallsensoranordnung ein Toleranzausgleichselement aufweist, um die Maßschwankungen auszugleichen. Hierdurch liegt die Ultraschallsensoranordnung ohne Spiel und vorzugsweise druckfrei an dem Messrohr an.

Bevorzugt ist das Toleranzausgleichselement in einer an der Außenseite des Gehäuses vorgesehenen Aufnahme einfügbar. Befindet sich die Aufnahme beispielsweise an der Unterseite des umlaufenden Rands, so liegt die Ultraschallsensoranordnung schwimmend auf dem Messrohr an. Schwimmend bedeutet hier, dass der Ultraschallsensor spielfrei in dem Messrohr aufgenommen ist, jedoch keine, gegebenenfalls nur geringe Druckkräfte auf die Ultraschallsensoranordnung, insbesondere auf den Behälter und das Koppelelement wirken.

Weiterhin ist es von Vorteil, dass das Gehäuse an seiner Oberseite axial nach außen weisende Rippen aufweist. Diese Rippen dienen als Kabelführungen, um sicherzustellen, dass die nach außen führenden Kabel nicht versehentlich beim Einfüllen der Vergussmasse in den Behälter gelangen. Auf diese Weise wird gewährleistet, dass der Behälter mittels der Vergussmasse fluiddicht ausgebildet ist.

Zur Abdichtung der Ultraschallsensoranordnung gegenüber einem Messrohr ist eine Dichtung vorgesehen, die an der Außenseite des Gehäuses, insbesondere des Behälters angeordnet ist.

Um in Betrieb eine Beschädigung der im Inneren der Ultraschallsensoren angeordneten elektrischen Kabel oder elektrischen Leitungen zu verhindern, ist eine Kabelzugentlastung vorgesehen.

Gegenstand der vorliegenden Erfindung ist auch eine Messvorrichtung zur Bestimmung des Durchflusses eines durch einen Rohrabschnitt hindurchströmenden Fluids, umfassend ein Messrohr mit einer Rohrwand, in der eine Öffnung vorgesehen ist, sowie eine Ultraschallsensoranordnung nach einem der vorhergehenden Ansprüche, wobei die Ultraschallsensoranordnung in der Öffnung angeordnet ist.

Insbesondere beim Einschrauben von Ultraschallsensoranordnungen in pulverbeschichteten Metallrohren besteht die Gefahr, dass die Beschichtung beschädigt wird, was zu Korrosionen an den beschädigten Stellen in feuchten Umgebungen führen kann. Vorzugsweise ist die Öffnung daher gewindefrei, so dass der Einsatz von pulverbeschichteten Metallrohren als Messrohre auch in feuchten Umgebungen möglich ist.

Gegengenfalls kann bei einer bevorzugten Weiterbildung eine Haltevorrichtung zur Fixierung der Ultraschallsensoranordnung vorgesehen sein.

### Kurze Beschreibung der Zeichnungen:

Bevorzugte Ausführungsformen werden anhand der beigefügten Zeichnungen näher erläutert, in denen zeigen:
- Fig. 1: eine perspektivische Ansicht einer zerlegten Messvorrichtung,
- Fig. 2: einen Teil einer Ultraschallsensoranordnung in perspektivischer Ansicht,
- Fig. 3: einen Querschnitt durch die Ultraschallsensoranordnung in einem Herstellungszustand,
- Fig. 4: eine einsatzbereite Ultraschallsensoranordnung in einer perspektivischen Ansicht, und
- Fig. 5: einen Querschnitt durch eine Ultraschallsensoranordnung in einer Messvorrichtung zur Bestimmung des Durchflusses eines durch einen Rohrabschnitt hindurchströmenden Fluids.

### Wege zur Ausführung der Erfindung und gewerbliche Verwertbarkeit:

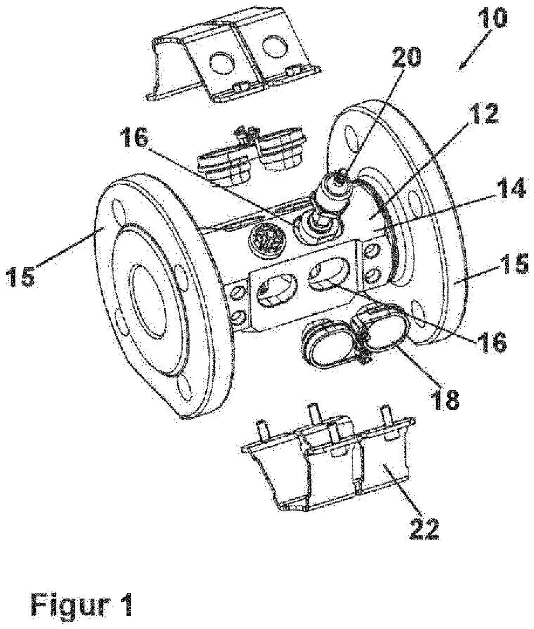

Fig. 1 zeigt eine Messvorrichtung zur Bestimmung des Durchflusses eines durch einen Rohrabschnitt hindurchströmenden Fluids 10 in einer zerlegten Darstellung. Die Messvorrichtung 10 umfasst ein Messrohr 12 mit einer Rohrwand 14. Beidseitig des Messrohrs 12 sind Flansche 15 zum Einbau in einem Rohrsystem vorgesehen. In dem Messrohr 12 befinden sich Öffnungen 16, in denen jeweils eine Ultraschallsensoranordnung 18 oder ein Messsensor 20 einsetzbar ist.

Weiterhin sind Halteelemente 22 außerhalb des Messrohrs 12 vorgesehen, um die Ultraschallsensoranordnungen 18 in ihren Positionen zu fixieren.

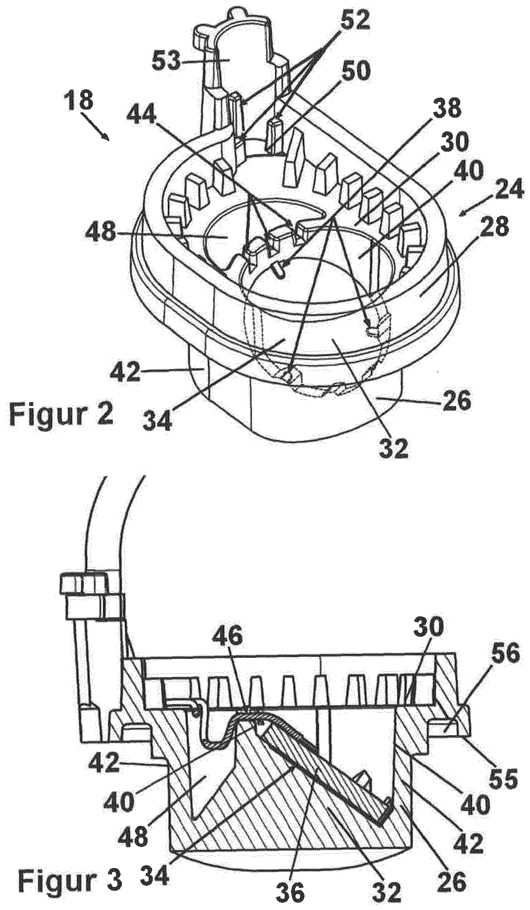

Fig. 2 zeigt einen Teil einer Ultraschallsensoranordnung 18 in perspektivischer Ansicht.

Die Ultraschallsensoranordnung 18 umfasst ein Gehäuse 24 mit einem Behälter 26 und einem umlaufenden Rand 28, wobei der Behälter 26 eine offene Oberseite 30 aufweist und der umlaufende Rand 28 an der Oberseite 30 des Behälters 26 nach außen versetzt an dem Behälter 26 einstückig befestigt ist.

Weiterhin ist ein keilförmiges Koppelelement 32 vorgesehen, wobei das Koppelelement 32 und der Behälter 26 einstückig ausgebildet sind. Das Koppelelement 32 ist im unteren Abschnitt des Behälters 26 vorgesehen, so dass es im Wesentlichen die Unterseite des Behälters 26 bildet.

Der Behälter 26, der umlaufende Rand 28 und das Koppelelement 32 sind einstückig aus dem gleichen Material hergestellt.

Die Oberseite des Koppelelements 32 ist als Auflagefläche 34 für ein piezoelektrisches Element 36 ausgebildet. Das piezoelektrische Element 36 ist als runde Scheibe ausgebildet und mit dem Koppelelement 32 verklebt.

Um eine gleichmäßige Klebeschicht zwischen piezoelektrischem Element 36 und Koppelelement 32 aufbringen zu können, sind Abstandshalter 38 am Außenrand der Auflagefläche 34 vorgesehen. Die aus dem gleichen Material wie die das Koppelelement hergestellten Abstandshalter 38 sind als fingerartige Vorsprünge mit einer ebenen Oberfläche ausgebildet, ragen vom Außenrand der Auflagefläche 34 radial nach Innen und sind so ausgelegt, dass der Abstand zwischen piezoelektrischem Element 36 und Koppelelement 32 parallel ist, wenn das scheibenförmige piezoelektrische Element 36 auf der Auflagefläche 34 anliegt.

Die Auflagefläche 34 ist kreisförmig ausgebildet, wobei an der Außenseite der Auflagefläche 34 Seitenwände 40 nach oben ragen. Die Seitenwände 40 werden hierbei teilweise durch die Behälterwand 42 gebildet. In den Seitenwänden 40 sind Schlitze 44 eingearbeitet, um eine elektrische Leitung 46, die mit dem piezoelektrischen Element 36 verbunden ist, nach außen zu führen. Die Schlitze 44 sind nach oben offen und weisen zumindest abschnittsweise eine Durchgangsbreite auf, die etwas geringer als der Durchmesser der elektrischen Leitung 46 ist, um die elektrische Leitung 46 in den Schlitzen 44 festklemmen zu können. Es sind mehrere Schlitze 44 vorgesehen, um gegebenenfalls mehrere elektrische Leitungen 46 festzuklemmen.

Zwischen der Behälterwand 42 und dem Koppelelement 32 ist ein Hohlraum 48 vorgesehen. Dieser Hohlraum 48 dient dazu, wie in Fig. 3 zu erkennen ist, die elektrische Leitung 46 des piezoelektrischen Elements 36 abschnittsweise aufzunehmen.

In dem umlaufenden Rand 28 ist ein Durchgang 50 vorgesehen, an dem Kabelführungsrippen 52 angeordnet sind. An dem Durchgang 50 ist weiterhin eine Kabelführungswand 53 vorgesehen, an der eine Kabelzugentlastung 54 angebracht ist. Die Kabelzugentlastung 54 ist als Crimp-Verbindung ausgebildet.

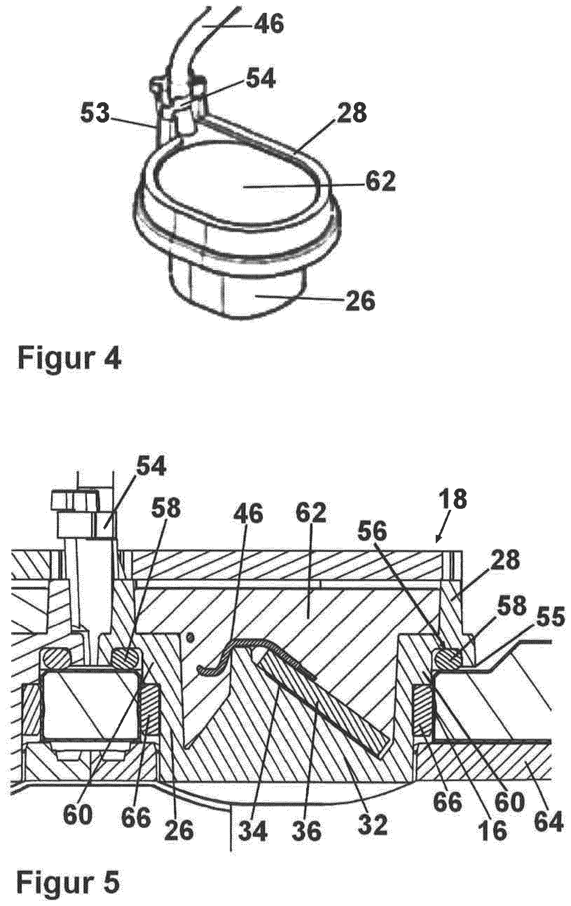

An der Unterseite 55 des umlaufenden Randes 28 ist eine Aufnahme 56 für ein Toleranzausgleichselement 58 vorgesehen (siehe Fig. 3 und 5). Die Aufnahme 56 für das Toleranzausgleichselement 58 erstreckt sich als ringförmige Nut entlang des Außenumfangs des nach außen versetzten Rands 28. Das Toleranzausgleichselement 58 ist als elastisches ringförmiges Band ausgebildet.

Zwischen der Unterseite des Behälters 26 und dem umlaufenden Rand 28 ist ein Vorsprung 60 in der Außenwand des Gehäuses vorgesehen.

Wie in Fig. 4 zu erkennen ist, sind der Innenraum des Behälters 26 und ein Teil des durch den umlaufenden Rand 28 gebildeten Hohlraums mit einer Vergussmasse 62 aufgefüllt. Die elektrische Leitung 46 wird am Durchgang 50 des umlaufenden Rands 28 nach außen geführt und ist mit der Kabelzugentlastung 54 verbunden.

Bei der Vergussmasse 62 handelt es sich beispielsweise um Silikon, vorzugsweise transparenten Silikon. Alternativ kann jede Art von Kunststoff verwendet werden, die vergießbar ist.

Vorzugsweise ist das Koppelelement 32 ebenfalls aus einem transparenten Material hergestellt, um Materialunregelmäßigkeiten, wie etwa wie Luftblasen oder Einschlüsse, die die akustischen Eigenschaften des Koppelelements 32 beeinflussen, erkennen zu können. Beispielsweise kann das Koppelelement 32 aus PSU, PEEK, PPS, LCP, PEI, PPSU oder Polysulfon hergestellt werden. Es eignet sich jedes Material, das die erforderlichen akustischen Eigenschaften zur Verwendung als Koppelelement aufweist und fluiddicht oder zumindest ausreichend fluiddicht ist, um das piezoelektrische Element 36 beispielsweise vor Wassereinfluss zu schützen.

Zur Herstellung des Koppelelements 32 wird zunächst das Gehäuse 24 mit dem laufenden Rand 28 als einstückiges Bauteil gefertigt. Anschließend wird eine Klebeschicht auf die Auflagefläche 34 aufgebracht und das piezoelektrische Element 36 auf dem Koppelelement 32 befestigt. Die zu dem Koppelelement 32 führende elektrische Leitung 46 wird zwischen die Schlitze 44 geklemmt und in den Hohlraum 48 geführt. Von dort wird die elektrische Leitung 46 zum Durchgang 50 geführt und mittels der Kabelführungsrippen 52 positioniert und an der Kabelführungswand 53 mit einer Kabelzugentlastung 54 fixiert. Anschließend wird die Vergussmasse in das Gehäuse 24 eingefüllt. Die Vergussmasse 62 bedeckt das piezoelektrische Element 36 und füllt den Hohlraum 48 mit der darin befindlichen elektrischen Leitung 46, so dass der Behälter 26 vollständig mit Vergussmasse 62 gefüllt ist. Ein Teil des durch den umlaufenden Rand 28 gebildeten Hohlraums wird ebenfalls mit der Vergussmasse 62 gefüllt.

Fig. 5 zeigt den Einbau einer Ultraschallsensoranordnung 18 in einem Messrohr 12 mit einem Innenrohr 64. Das Messrohr 12 weist eine Öffnung 16 auf, in der die Ultraschallsensoranordnung 18 angeordnet ist. Die Öffnung 16 des Messrohrs 12 ist gewindefrei, so dass die Ultraschallsensoranordnung 18 in die Öffnung 16 des Messrohrs 12 eingesteckt ist. Wie in Fig. 1 gezeigt, sind Halteelemente 22 vorgesehen, die oberhalb der Ultraschallsensoranordnung 18 angeordnet sind.

Die Unterseite 55 des umlaufenden Rands 28 liegt mittels des Toleranzausgleichselements 58 auf dem Messrohr 12 auf. Das Toleranzausgleichselement 58 ist in der als Nut ausgebildeten Aufnahme 56 aufgenommen, wobei das Toleranzausgleichselement 58 einen größeren Durchmesser aufweist als die Tiefe der Nut, so dass das Toleranzausgleichselement 58 über die Unterseite 55 des umlaufenden Rands 28 nach außen herausragt. Die Unterseite des umlaufenden Rands ist mit Spiel bzw. geringem Abstand oberhalb des Messrohrs angeordnet, während das Toleranzausgleichselement 58 direkt auf dem Messrohr 12 aufliegt und eine spielfreie Verbindung ausbildet. Hierdurch wird die Ultraschallsensoranordnung 18 auch bei Messrohren mit herstellungsbedingten Maßtoleranzen im Wesentlichen drucklos bzw. kräftefrei in der Öffnung 16 des Messrohrs 12 gehalten.

Zwischen dem Gehäuse 24 und dem Messrohr 12 ist in der Öffnung 16 ein Dichtring 66 vorgesehen, der unterhalb des Vorsprungs 60 angeordnet ist. Der Dichtring 66 sorgt dafür, dass eine dichte Verbindung zwischen Messrohr 12 und Ultraschallsensoranordnung 18 vorliegt.

Die Unterseite des Gehäuses 24 ist an die Geometrie des Messrohrs 12 und des Innenrohrs 64 angepasst, so dass die Ultraschallsensoranordnung 18 im Inneren des Messrohrs 12 flächenbündig mit der Innenwand des Innenrohrs 64 ausgerichtet ist.

Bei einer nicht dargestellten Ausführungsform ist das Innenrohr 64 weggelassen. In diesem Fall ist die Ultraschallsensoranordnung 18 im Innern des Messrohrs flächenbündig mit dem Messrohr 12 ausgebildet.

Die beschriebene Ultraschallsensoranordnung 18 ist fluiddicht ausgebildet, so dass insbesondere das piezoelektrische Element 36 vor Feuchtigkeit oder Wasser aufgrund von Umgebungsbedingung geschützt ist. Die einstückige Ausbildung des Behälters 26, des umlaufenden Rands 28 und des Koppelelements 32 sorgt für geringe Spannungen in der Ultraschallsensoranordnung 18 aufgrund von materialbedingten Ausdehnungen unter Wärmeeinfluss. Durch den Einsatz des Toleranzausgleichselements 58 und des Dichtrings 66 werden Maßtoleranzen des Messrohrs 12 ausgeglichen. Ein unerwünschtes Einquetschen der Ultraschallsensoranordnung 18 in die Öffnung 16 des Messrohrs 12 wird dadurch vermieden. Die Ultraschallsensoranordnung 18 lässt sich spielfrei und im Wesentlichen druck- bzw. kräftefrei in einem Messrohr 12 einbauen.

Bei einer nicht dargestellten Ausführungsform kann das Koppelelement als Podest ausgebildet sein, um Ultraschall senkrecht zur Strömungsrichtung des Fluids in einem Messrohr einzukoppeln.

Anstelle eines runden piezoelektrischen Elements ist auch der Einsatz von piezoelektrischen Elementen mit einer anderen Geometrie möglich. So kann das piezoelektrische Element auch eine eckige, insbesondere viereckige Form aufweisen. In diesem Fall ist die Geometrie der Auflagefläche an die Form des piezoelektrischen Elements anzupassen.

## Patentansprüche

1. Ultraschallsensoranordnung umfassend
ein Gehäuse (24) mit einem oben offenen Behälter (26),
ein scheibenförmiges, piezoelektrisches Element (36) und
ein Koppelelement (32) im Inneren des Behälters (26), wobei das Koppelelement (32) über eine Auflagefläche (34), an der das piezoelektrische Element (36) angeordnet ist, verfügt und an der Unterseite des Behälters (26) vorgesehen ist,
wobei der Behälter (26) und das Koppelelement (32) einstückig ausgebildet sind und wobei zumindest das piezoelektrische Element (36) mit einer Vergussmasse bedeckt ist, wobei
die Auflagefläche (34) zumindest abschnittsweise von einer Wand (40, 42) umgeben ist und **dadurch gekennzeichnet, dass** in der Wand (42) offene Schlitze (44) vorgesehen sind.

2. Ultraschallsensoranordnung nach einem der vorhergehenden Ansprüche, **dadurch gekennzeichnet, dass** in der Wand (42) oben offene Schlitze (44) vorgesehen sind.

3. Ultraschallsensoranordnung nach einem der vorhergehenden Ansprüche, **dadurch gekennzeichnet, dass** auf der Auflagefläche (34) Abstandshalter (38) vorgesehen sind.

4. Ultraschallsensoranordnung nach einem der vorhergehenden Ansprüche, **dadurch gekennzeichnet, dass** das Koppelelement (32) keilförmig ausgebildet ist.

5. Ultraschallsensoranordnung nach einem der vorhergehenden Ansprüche, **dadurch gekennzeichnet, dass** das Koppelelement (32) und/oder die Vergussmasse aus einem transparenten Material hergestellt sind.

6. Ultraschallsensoranordnung nach einem der vorhergehenden Ansprüche, **dadurch gekennzeichnet, dass** der Behälter (26) eine Behälterwand (42) aufweist und zwischen Koppelelement (32) und Behälterwand (42) ein Hohlraum vorgesehen ist.

7. Ultraschallsensoranordnung nach einem der vorhergehenden Ansprüche, **dadurch gekennzeichnet, dass** der Behälter (26) mit der Vergussmasse (62) gefüllt ist.

8. Ultraschallsensoranordnung nach einem der vorhergehenden Ansprüche, **dadurch gekennzeichnet, dass** das Gehäuse (24) einen umlaufenden Rand (28) aufweist, der nach außen versetzt an der Oberseite des Behälters (26) angeordnet ist.

9. Ultraschallsensoranordnung nach einem der vorhergehenden Ansprüche, **dadurch gekennzeichnet, dass** ein Toleranzausgleichselement (58) vorgesehen ist, welches vorzugsweise in einer an der Außenseite des Gehäuses (24) vorgesehenen Aufnahme (56) einfügbar ist.

10. Ultraschallsensoranordnung nach einem der vorhergehenden Ansprüche, **dadurch gekennzeichnet, dass** das Gehäuse (24) an seiner Oberseite axial nach außen weisende Rippen (52) aufweist.

11. Ultraschallsensoranordnung nach einem der vorhergehenden Ansprüche, **dadurch gekennzeichnet, dass** an der Außenseite des Gehäuses (24) eine Dichtung (66) vorgesehen ist.

12. Ultraschallsensoranordnung nach einem der vorhergehenden Ansprüche, **dadurch gekennzeichnet, dass** eine Kabelzugentlastung (54) vorgesehen ist.

13. Messvorrichtung zur Bestimmung des Durchflusses eines durch einen Rohrabschnitt hindurchströmenden Fluids, umfassend
ein Messrohr (12) mit einer Rohrwand (14), in der eine Öffnung (16) vorgesehen ist, sowie
eine Ultraschallsensoranordnung (18) nach einem der vorhergehenden Ansprüche, wobei die Ultraschallsensoranordnung (18) in der Öffnung (16) angeordnet ist.

14. Messvorrichtung nach Anspruch 13, **dadurch gekennzeichnet, dass** die Öffnung (16) gewindefrei ist.

15. Messvorrichtung nach einem der Ansprüche 13 oder 14, **dadurch gekennzeichnet, dass** eine Haltevorrichtung (22) zur Fixierung der Ultraschallsensoranordnung (18) vorgesehen ist.

## Claims

1. An ultrasonic sensor arrangement comprising
a housing (24) with a container (26) which is open at the top,
a disc-shaped, piezoelectric element (36) and
a coupling element (32) in the interior of the container (26), wherein the coupling element (32) has a bearing surface (34), on which the piezoelectric element (36) is arranged, and said coupling element (32) being provided on the underside of the container (26),
wherein the container (26) and the coupling element (32) are integrally formed, and
wherein at least the piezoelectric element (36) is covered with a potting compound, where the bearing surface (34) is surrounded at least in portions by a wall (40, 42) and **characterized in that** open slots (44) are provided in the wall (42).

2. The ultrasonic sensor arrangement according to any one of the preceding claims, **characterized in that** slots (44) open at the top are provided in the wall (42).

3. The ultrasonic sensor arrangement according to any one of the preceding claims, **characterized in that** spacers (38) are provided on the bearing surface (34).

4. The ultrasonic sensor arrangement according to any one of the preceding claims, **characterized in that** the coupling element (32) is wedge-shaped.

5. The ultrasonic sensor arrangement according to any one of the preceding claims, **characterized in that** the coupling element (32) and/or the potting compound are made from a transparent material.

6. The ultrasonic sensor arrangement according to any one of the preceding claims, **characterized in that** the container (26) has a container wall (42) and a cavity is provided between the coupling element (32) and the container wall (42).

7. The ultrasonic sensor arrangement according to any one of the preceding claims, **characterized in that** the container (26) is filled with the potting compound (62).

8. The ultrasonic sensor arrangement according to any one of the preceding claims, **characterized in that** the housing (24) has a circumferential edge (28) which is outwardly offset on the upper side of the container (26).

9. The ultrasonic sensor arrangement according to any one of the preceding claims, **characterized in that** a tolerance compensation element (58) is provided, which can preferably be inserted in an accommodation (56) provided on the outer side of the housing (24).

10. The ultrasonic sensor arrangement according to any one of the preceding claims, **characterized in that** the housing (24) has ribs (52) on its upper side which point axially outward.

11. The ultrasonic sensor arrangement according to any one of the preceding claims, **characterized in that** a seal (66) is provided on the outer side of the housing (24).

12. The ultrasonic sensor arrangement according to any one of the preceding claims, **characterized in that** a cable strain relief means (54) is provided.

13. A measuring apparatus for determining the flow rate of a fluid which flows through a pipe portion, the apparatus comprising
a measuring pipe (12) with a pipe wall (14), in which an opening (16) is provided, and
an ultrasonic sensor arrangement (18) according to any one of the preceding claims, wherein the ultrasonic sensor arrangement (18) is arranged in the opening (16).

14. The measuring apparatus according to claim 13, **characterized in that** the opening (16) is thread-free.

15. The measuring apparatus according to either claim 13 or claim 14, **characterized in that** a holding apparatus (22) is provided for securing the ultrasonic sensor arrangement (18).

## Revendications

1. Ensemble de capteur à ultrasons, comprenant
un boîtier (24) pourvu d'un récipient ouvert en haut (26),
un élément piézoélectrique (36) en forme de disque; et
un élément de couplage (32) situé à l'intérieur du récipient (26), l'élément de couplage (32) comportant une surface d'appui (34) sur laquelle est agencé l'élément piézoélectrique (36), et étant prévu sur la face inférieure du récipient (26),
le récipient (26) et l'élément de couplage (32) étant formés d'une seule pièce et au moins l'élément piézoélectrique (36) étant recouvert d'une matière d'enrobage,
la surface d'appui (34) étant entourée au moins par endroits par une paroi (40, 42), et **caractérisé en ce que**
des fentes ouvertes (44) sont prévues dans la paroi (42).

2. Ensemble de capteur à ultrasons selon la revendication précédente, **caractérisé en ce que** des fentes ouvertes (44) en haut sont prévues dans la paroi (42).

3. Ensemble de capteur selon l'une quelconque des revendications précédentes, **caractérisé en ce que** des entretoises (38) sont prévues sur la surface d'appui (34).

4. Ensemble de capteur à ultrasons selon l'une quelconque des revendications précédentes, **caractérisé en ce que** l'élément de couplage (32) est en forme de coin.

5. Ensemble de capteur à ultrasons selon l'une quelconque des revendications précédentes, **caractérisé en ce que** l'élément de couplage (32) et/ou la matière d'enrobage sont fabriqués à partir d'un matériau transparent.

6. Ensemble de capteur à ultrasons selon l'une quelconque des revendications précédentes, **caractérisé en ce que** le récipient (26) présente une paroi de récipient (42), et une cavité est prévue entre l'élément de couplage (32) et la paroi de récipient (42).

7. Ensemble de capteur à ultrasons selon l'une quelconque des revendications précédentes, **caractérisé en ce que** le récipient (26) est rempli de la matière d'enrobage (62).

8. Ensemble de capteur à ultrasons selon l'une quelconque des revendications précédentes, **caractérisé en ce que** le boîtier (24) présente un bord périphérique (28) qui est agencé de manière décalée vers l'extérieur au niveau de la face supérieure du récipient (26).

9. Ensemble de capteur à ultrasons selon l'une quelconque des revendications précédentes, **caractérisé en ce qu'**un élément de compensation de tolérance (58) est prévu, qui peut de préférence être inséré dans un logement (56) prévu sur le côté extérieur du boîtier (24).

10. Dispositif de capteur à ultrasons selon l'une quelconque des revendications précédentes, **caractérisé en ce que** le boîtier (24) présente sur sa face supérieure des nervures (52) orientées axialement vers l'extérieur.

11. Ensemble de capteur à ultrasons selon l'une quelconque des revendications précédentes, **caractérisé en ce qu'**un joint (66) est prévu sur le côté extérieur du boîtier (24).

12. Ensemble de capteur à ultrasons selon l'une quelconque des revendications précédentes, **caractérisé en ce qu'**un dispositif de décharge de traction de câble (54) est prévu.

13. Dispositif de mesure pour déterminer le débit d'écoulement d'un fluide s'écoulant à travers une section de tube, comprenant :
un tube de mesure (12) comprenant une paroi de tube (14) dans laquelle une ouverture (16) est prévue, et un ensemble de capteur à ultrasons (18) selon l'une quelconque des revendications précédentes, dans lequel l'ensemble de capteur à ultrasons (18) est agencé dans l'ouverture (16).

14. Dispositif de mesure selon la revendication 13, **caractérisé en ce que** l'ouverture (16) est sans filetage.

15. Dispositif de mesure selon l'une quelconque des revendications 13 ou 14, **caractérisé en ce qu'**un dispositif de maintien (22) est prévu pour une fixation de l'ensemble de capteur à ultrasons (18).
